(19) Europäisches Patentamt
European Patent Office
Office européen des brevets

(11) **EP 3 660 747 A1**

(12) **EUROPEAN PATENT APPLICATION**

(43) Date of publication:
**03.06.2020 Bulletin 2020/23**

(51) Int Cl.:
**G06N 3/04** (2006.01)   **G06N 3/063** (2006.01)

(21) Application number: **19209227.8**

(22) Date of filing: **14.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2018 US 201816206622**

(71) Applicant: **Robert Bosch GmbH**
**70442 Stuttgart (DE)**

(72) Inventors:
• **Rocznik, Thomas**
**Mountain View, California 94040 (US)**
• **Duerichen, Robert**
**Oxford, OX2 6TF (GB)**
• **Peters, Christian**
**Mountain View, California 94041 (US)**

(54) **BIT INTERPRETATION FOR CONVOLUTIONAL NEURAL NETWORK INPUT LAYER**

(57)    To efficiently execute deep convolutional neural networks (CNN) on edge devices (e.g., wearable device like an Apple Watch or FitBit) it may be necessary to reduce the bit width of the network parameters down to 1-bit. Binarization at the first layer of a CNN has typically not been performed because it may lead to an increase in the output validation error of the input data. The method and systems provided include a binary input layer (BIL) which accepts binary input data by learning bit specific binary weights. By executing the CNN using binary input data, the present method and system may result in a reduction in the chip area consumed and the energy used in contrast to CNN models executed using floating point input data.

Figure 4

**Description**

TECHNICAL FIELD

The following relates generally to convolutional neural networks and more specifically to binarization of the first layer of a convolutional neural network.

BACKGROUND

Convolutional neural network (CNN) is a class of deep, feed-forward artificial neural networks, most commonly applied to many different applications that include computer vision and speech recognition. Prior CNN models have typically required high energy consumption, memory storage, and chip area to execute. Therefore, a need for a exists for a CNN that does not require as much chip area and memory and when executed does not require high amounts of energy.

SUMMARY

In one embodiment, a system and method for implementing a convolutional neural network (CNN) that receives input data is disclosed. The CNN may then filter the input data by applying a bitwise weight algorithm that learns bit specific relevance without a predefined ordinal structure being provided to generate direct binary input data (DBID). The bitwise weight algorithm applied may be the resulting sum of each individual input value multiplied by a bit specific weight that is applied to every bit of the input value. The DBID may then be provided to one or more convolutional layers within the CNN.

The DBID may also be provided to the convolutional layer without performing additional normalization to the input data. In one aspect, the CNN may further include one or more fully connected layers and a softmax layer. In another aspect, the CNN may also include a binary input layer having one or more convolutional kernel (K) filters having a filter size that is at least a 1x1 array.

BRIEF DESCRIPTION OF THE DRAWINGS

Figure 1 is a diagram of a convolutional neural network having a floating point or fixed-point integer input layer;

Figure 2 is an illustration of a 3-channel color image dataset;

Figure 3 is a diagram of a convolutional neural network having a direct binary input layer;

Figure 4 is a diagram of a convolutional neural network having a binary input layer; and

Figure 5 is a graphical illustration of the direct binary input data approach.

DETAILED DESCRIPTION

As required, detailed embodiments are disclosed herein; however, it is to be understood that the disclosed embodiments are merely exemplary and may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present embodiments.

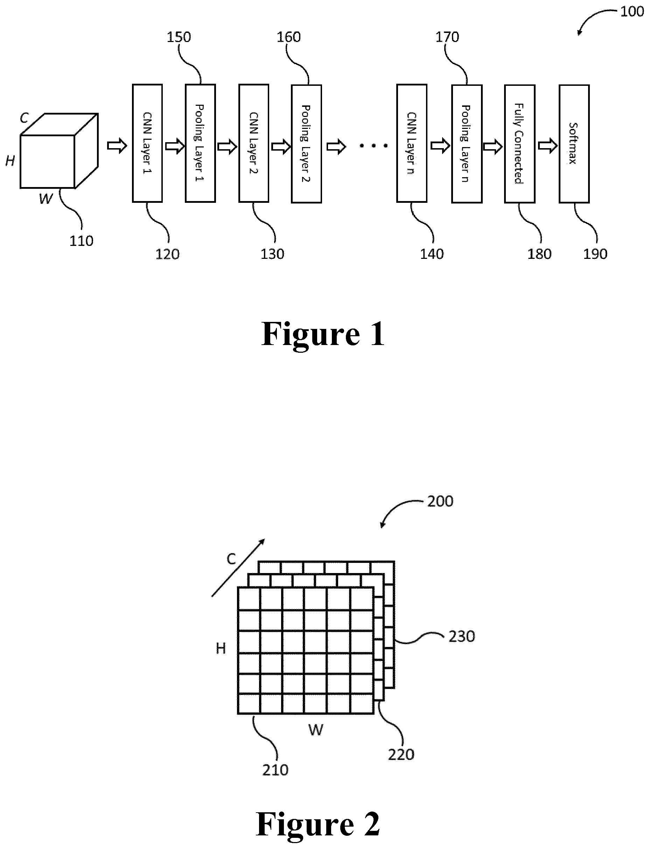

In the neural network field, the use of deep convolutional neural networks (CNN) has increased for a wide variety of applications including computer vision (e.g., object recognition or facial recognition) and speech recognition. With reference to Figure 1, a CNN 100 may include: input data 110; one or more convolutional layers 120-140; one or more pooling layers 150-170; a fully connected layer 160; and, a softmax layer 170.

The input data 110 may be raw image data, voice data, or text data. Input data 110 may also include measurements received from sensor readings. Alternatively, input data 110 may be lightly processed prior to being provided to CNN 100. Convolutional layers 120-140 then extract features from input data 110. Convolutional layer 120-140 generally applies filtering operations (e.g., kernels) before passing on the result to the next layer of the CNN 100. For instance, Figure 2 illustrates a color image 200 that may be the input data 110 received by convolutional layer 120. As shown, color image 200 may include a 6 x 6 array of red values 210, a 6 x 6 array of green values 220, and a 6 x 6 array of blue values 230. Since CNN input data is typically defined as *Height x Width x Channels*, color image 200 may be defined as a 6 x 6 x 3 array. For data like color image 200, convolution layers can execute filtering routines to perform operations such as image identification, edge detection of an image, and image sharpening.

The CNN may also include one or more pooling layers 150-170 that receives the convoluted data from the respective convolution layer 120-140. Pooling layers 150-170 may include one or more pooling layer units that apply a pooling function to one or more convolution layer outputs computed at different bands using a pooling function. For instance, pooling layer 150 may apply a pooling function to the kernel output received from convolutional layer 120. The pooling function implemented by pooling layers 150-170 may be an average or a maximum function or any other function that aggregates multiple values into a single value.

Next, a fully connected layer 180 may attempt to learn non-linear combinations for the high-level features in the output data received from the convolutional layers 120-140 and pooling layers 150-170. Lastly, CNN 100 may include a softmax layer 190 that combines the outputs of the fully connected layer 180 using softmax functions.

Models like CNN 100 typically need high energy consumption, memory storage, and chip area. Such disadvantages would generally be the case if CNN 100 were to be implemented on a processor, like a field programmable gate area (FPGA) or application specific integrated circuit (ASIC). Typically, CNN 100 would require a power-hungry microcontroller or graphic processing unit with large amounts of memory to store the necessary parameters. Indeed, the amount of surface area needed to execute on a FPGA or ASIC would be too large for most applications. It is therefore not generally feasible to execute a large version of CNN 100 having multiple layers and a high number of convolutional filters on low-power edge device that have less processing power and memory (e.g., a smart watch or iPhone). The full potential of implementing the CNN 100 model may not be realized.

The high energy consumption and memory usage of CNN 100 may be attributable to the fact that the value of input data 110 consists of a fixed-point integer having a defined amount of bit resolution (i.e., precision). The value of input data 110 may also be represented as a fixed-point integer with M bit resolution using Equation (1) below:

$$x = \sum_{m=o}^{M-1} x_m^b * 2^m \qquad (1)$$

where,

$x$    is an individual input value;
$M$    is the bit resolution of each input value; and
$m$    is the $m^{th}$ bit value of $x$.

For CNN 100, the bit resolutions may vary from in size depending on the application. For example, for image data the bit resolution may be up to 8-bit (*i.e.*, $M$ = 8-bit), for internal and environmental sensor data the bit resolution may be up to 16-bit, and for audio data the bit resolution may be up to 24-bit. But it is understood that the bit resolution may be smaller than 8-bit or larger than 24-bit. Once normalized, the input data will have been converted from *M*-bit fixed-point integer values to floating-point numbers.

To handle input data that includes fixed-point integer or floating-point values, systems have been developed that include depth-wise separable convolutions that reduce the computation in the first few layers of CNN 100. Another method of handling input data involves simplifying CNN 100 using low bit width quantization of network parameters to enable inference on wearable devices (e.g., smart watches) or other edge devices.

For instance, floating-point inputs may be multiplied by floating point weights before some clipping is applied such that the values can be represented in binary format and processed by CNN 100. Usage of binarized weights and activations to the input data has resulted in lower power consumption, chip area usage, and memory usage on image classification benchmark datasets like CIFAR-10 or SVHN. Binary weight CNN networks evaluated using image classification databases like ImageNet have also shown lower power consumption and memory usage while achieving accuracy comparable to a full-precision CNN network.

Another approach for binarizing multiplications at the first layer can be achieved by Equation (2) below:

$$s = \sum_{m=o}^{M-1} 2^m (x_m^b * w^b) \qquad (2)$$

where,

$s$ is the resulting sum;
$x$ is an individual input value;
$M$ is the bit resolution of each input value;
$m$ is the $m^{th}$ bit value of $x$; and
$w^b$ is the binary weight being applied to the input value.

The above approach eliminates the normalization step and the multiplication may be performed using $M$-bit fixed-point integers. Yet, such fixed-point input data (FPID) approaches may also present drawbacks. First, input value $(x_m^b)$ is multiplied by the same binary weight $w^b$. Also, the ordinal structure of the input bits being defined by the factor $2^m$ may result in additional computations. As such, overall energy usage and chip-area usage may not be reduced significantly, and the prediction accuracy might be decreased.

In general, greater reduction in energy usage and chip-area usage of a CNN may be realized by binarization of the input data at the first layer (and possibly last layer) because the number of parameters required and computations executed within a CNN's first layer may be relatively low when compared to the residual network. For instance, input data typically has much fewer channels (*e.g.*, color image 200 includes only 3-channels: red, green, and blue) than representation of the same data within the residual network (*e.g.*, CNN layer with 512 filters).

One limitation to binarization of the first data may be that two different multiplier types may be needed with different bit widths to perform the computations. Such a limitation may be outweighed by applications where a completely binarized system may be beneficial to further minimize energy consumption and cost (*e.g.*, wearable devices such as an Apple Watch or FitBit). In one such approach, binarization of the complete network, including the first layer, was contemplated using 1, 2, and 4-bit resolutions for weights, activations and gradients. Under such an approach, the computations performed at the first layer may not be executed by a binary multiplier as non-binary input data with $M$-bit precision was multiplied by binary weights.

A system and method are therefore contemplated where the entire CNN network can be executed in binary format thereby allowing efficient binary computation of all multiplications at the input layer. By using bit-specific binary weights, the CNN models can learn which bits of the input data are relevant and which not. This may be accomplished by multiplying each bit by its own 1-bit weight. It is contemplated that these bit-specific binary weights may be trained during a training phase using a labeled dataset for a specific or given use-case. For instance, the bit-specific binary weights may be trained using known image classification datasets (e.g., SVHN and CIFAR-10) or known wearable based human activity recognition datasets (e.g., PAMAP2).

For instance, the CNN network can be executed using a direct binary input data (DBID) system and method where the input data is binary and no further normalization of the input data is required (*e.g.*, scaling all input data (x) to a range within [0,1]). CNN models may include normalization where a gain and offset are added to the input data so that the whole range of the input resolution may be used. The present method and system do not require evaluating the number as a whole. Instead, the present method and system is capable of evaluating individual bits of the input data. As such, normalization may be applied by the present method and system. For instance, if an input signal did not reach 50% of the dynamic range of the input resolution, the highest bit would never change value making it very likely that the weight for this bit is "0" after the training phase. The DBID approach can be executed based on Equation (3) below:

$$s = \sum_{m=o}^{M-1} (x_m^b * w_m^b) \qquad (3)$$

where,
$s$ is the resulting sum;
$x$ is an individual input value;
$M$ is the bit resolution of each input value;
$m$ is the $m^{th}$ bit value of $x$; and
$w_m^b$ is the bit specific weight being applied to every bit of the input value.

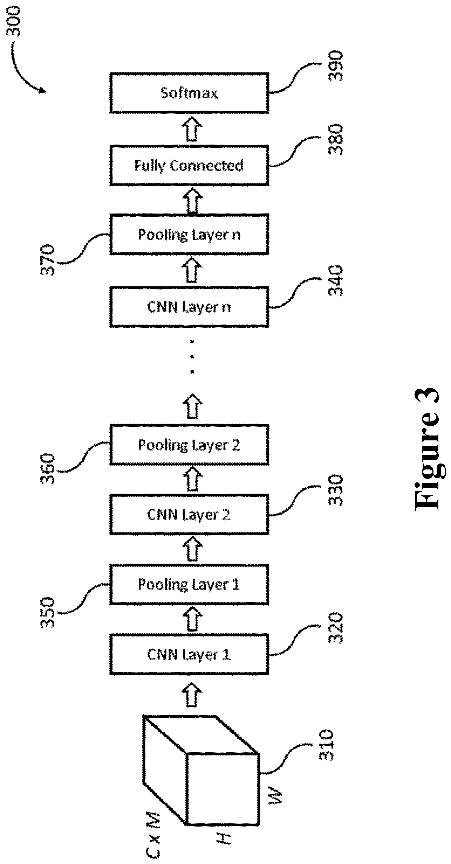

Figure 3 illustrates a CNN 300 executed using the DBID system and method of one or more embodiments. As shown, input data 310 is ow defined in binary format as $H \times W \times (C \times M)$. The difference between input data 310 and input data 110 is the added dimension "M." Each channel of input data 310 no longer includes an additional "M" dimensional data, which may be 1-bit in resolution.

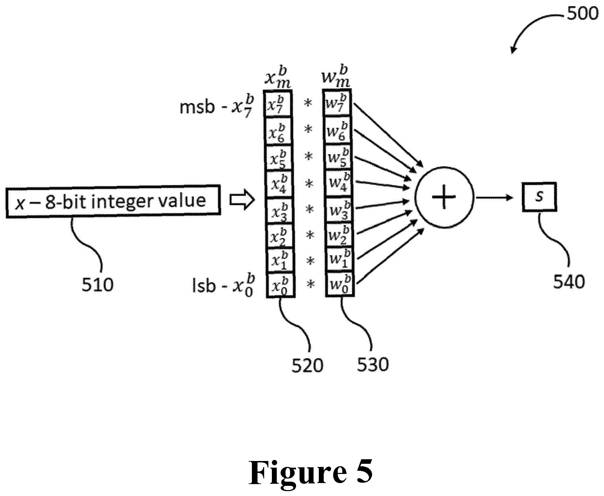

Figure 5 illustrates an example of filtering the input data 310 in binary format based on Equation (3). As shown, an 8-bit integer value 510 may be represented as bit values $\left(x_m^b\right)$ 520 from a least significant bit $\left(x_0^b\right)$ to a most significant bit $\left(x_7^b\right)$. Each bit of $x_m^b$ 520 is then multiplied by its respective bit specific weight $\left(w_m^b\right)$ 530. After the bit specific weight $\left(w_m^b\right)$ 530 has been applied to each bit value $\left(x_m^b\right)$ 520, the resulting values are summed provide a resulting sum value 540.

This is in contrast to input data 110 that was defined as normalized floating-point values or fixed-point integer values with M-bit resolution. Although the input data 310 has now been defined in binary format, the remainder of CNN 300 is constructed like CNN 100. For instance, CNN 300 includes one or more convolutional layers 320-340 and pooling layers 350-370. CNN 300 also includes at least one fully connected layer 380 and a softmax layer 390. It is also contemplated that CNN 300 could instead be a recurrent neuronal network (RNN). It is contemplated that the RNN could have one or more recurrent neuronal network layers in place of the at least one fully connected layer 380 or between the one or more convolutional layers 320-240.

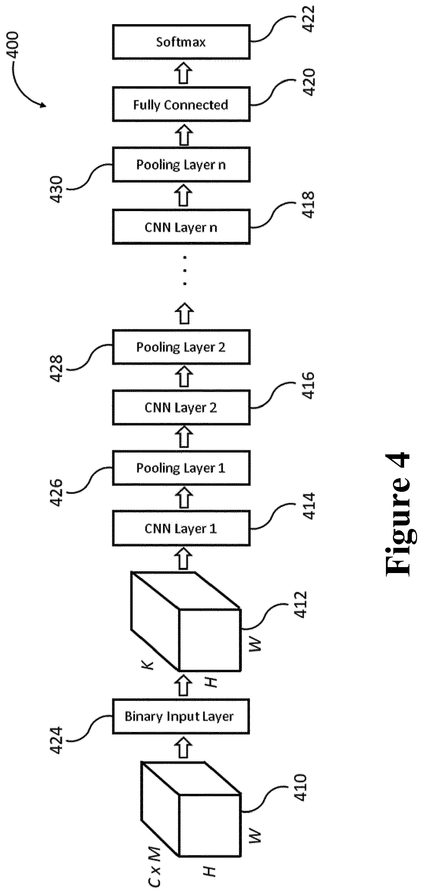

Figure 4 illustrates an alternative CNN 400 where after binary input data 410 an additional binary input layer 424 (BIL) is included. BIL 424 is an additional convolutional filter layer that may be added between the binary input data 410 and the first convolutional layer 414 of the CNN 400. The convolutional kernel filter of BIL 424 may be defined as a filter size that is at least a *1 x 1* array. The BIL 424 allows for factorizing a convolution in a depth-wise and point-wise convolution. The output data 412 (represented as a data container having a dimension *W x H x K*) from BIL 424 may then be provided to one or more additional convolutional layers 414-418 and pooling layers 426-430. CNN 400 also include at least one fully connected layer 420 and a softmax layer 422.

Table 1 below is a comparison between known CNN approaches (e.g., baseline and fixed-point), the DBID approach, and the BIL approach.

|  | **Baseline** | **Fixed Point (FPID)** | **DBID** | **BIL** |
|---|---|---|---|---|
| Input data | floating points | fixed point int. | binary | binary |
| Weight type | floating points | binary | binary | binary |
| # multiplications | $HWCF^2I$ | $HWCF^2I$ | $HWCF^2IM$ | $HWK(MC + F^2I)$ |
| # weights | $CF^2I$ | $CF^2I$ | $CF^2IM$ | $CMK + F^2IK$ |

The baseline and fixed-point integer models (FPID) are representative of CNN 100 illustrated and described above using Figure 1. The DBID model is representative of CNN 300 illustrated and described above using Figure 2. Lastly, the BIL model is representative of CNN 400 illustrated and described above using Figure 3. For the dataset, the input data was defined as having a shape *Height x Width x Channel* and a precision of M-bits. For the dataset, the first convolutional layer may include one or more convolutional kernel filters that are defined having a size *F x F*. The BIL model, further includes one or more convolutional kernel filters having a filter size of 1x1.

During evaluation using known learning datasets (e.g., PAMP2), the BIL model demonstrated a relative chip-area usage and energy usage reduction of 98.14% from the baseline model where the input data and weight type are both defined as floating point values. During further evaluation using known learning datasets (e.g., PAMP2), the DBID model demonstrated a relative chip-area usage and energy usage reduction of 99.79% from the baseline model.

The baseline, FPID, DBID, and BIL models may also be evaluated using image classification datasets (SVHN and CIFAR-10) and a wearable based human activity recognition dataset (PAMAP2). For instance, Table 2 below provides an exemplary set of results for various CNN approaches. The exemplary results include the validation error (%) of networks when full precision data and weights at the first layer. Also, Table 2 below illustrates modifying the number of convolutional filters for the BIL approach. However, it is contemplated that the results could vary from the chart below.

| **Dataset** | **Baseline** | **FPID** | **DBID** | **BIL (*K*=32)** | **BIL (*K*=64)** | **BIL (*K*=128)** | **BIL (*K*=256)** |
|---|---|---|---|---|---|---|---|
| PAMAP2 | 21.66 | 40.62 | 25.48 | 27.51 | 21.45 | 19.73 | 19.74 |
| SVHN | 3.15 | 4.33 | 3.8 | 4.32 | 4.11 | 3.61 | 3.42 |
| CIFAR-10 | 9.07 | 10.94 | 15.48 | 35.27 | 18.29 | 16.37 | 13.65 |

The above results were based on an exemplary experiment where the PAMAP2 dataset was designed to emulate a smart watch behavior using data of a wrist sensor (e.g., 3D accelerometer and gyroscope) and heart rate monitor (7-dimensions in total). The experimental inputs were 1 second long time windows (resulting in 100 values with a sampling rate of $f_S$=100 Hz) with an input dimension that may be [7 x 100 x 1]. For the PAMAP2 example, the network was defined as: 24 - C3 + MP2 + 32 - C3 + MP2 + 64 - C64 + MP2 + FC256 + Softmax. For the PAMAP2 example, the convolutions and max pooling layers might be performed along the time dimension with C3 having a filter shape [1 x 3] and MP2 having a filter shape [1 x 2]. It is further contemplated that for the PAMAP2 example, batch normalization might be added after every layer and there might exist a drop out layer before the fully connected layer.

The results of the SVHN was also based on an exemplary experiment using photos from house numbers, were the cropped format of the dataset was a 32 x 32 pixel colored image centered around every digit. For the SVHN example, a 7-layer network was defined as: 48 - C5 + MP2 - 2 * (64 - C3) - MP2 - 3 * (128 - C3) - FC512 - Softmax. For the SVHN example, batch normalization at every layer was performed and the network included a drop out layer before the fully connected layer. Lastly, the SVHN example resized the pictures to 40 x 40 pixel.

Lastly, the results of the CIFAR-10 was also based on an exemplary experiment following a VGG inspired architecture which was defined as: 2 * (128 - C3) + MP2 + 2 * (256 - C3) + MP2 + 2 * (512 - C3) + MP2 + 1024 - FC + Softmax. For the CIFAR-10 example, the size of the training data was increased using data augmentation.

As illustrated by Table 2, there are similar propensities between the PAMAP2 and SVHN datasets. For instance, the FPID or DBID approach increases the validation error significantly for PAMAP2 and slightly for SVHN. By adding a BIL layer with 64 convolutional kernel filters ($K$= 64), the error can be decreased similar to the level of the baseline model. For the PAMAP2 dataset, the BIL model may even outperform the baseline error by 1.92 percentage points (i.e., 21.66% - 19.74% = 1.92%).

Based on the evaluated datasets, it is contemplated that there may be several reasons why the BIL model may outperform the baseline model. First, PAMAP2 is a known multi-modal dataset that includes accelerometer, gyroscope and heart rate data. In contrast to image datasets (e.g., SVHN and CIFAR-10), not the complete range of the sensor modalities may be included (e.g., very high accelerations). Consequently, not all input bits may be equally relevant. This in turn, motivates the use of bit specific binary weights. Second, the channels are treated differently for PAMAP2 than for the image datasets (i.e., SVHN and CIFAR-10). For PAMAP2, the input data has the shape [Height = 7 x Width = 100 x Channel = 1] while for SVHN image dataset the shape may be [Height = 40 x Width = 40 x Channel = 3] and the CIFAR-10 image dataset the shape may be [Height = 32 x Width = 32 x Channel = 3]. The consequence is that the (RGB) channels will be fused at the first layer in case of SVHN and CIFAR-10 datasets, while they may remain separate for PAMAP2 dataset.

As the number of BIL convolutional filters ($K$) may be the same for all datasets, the image classification models may have less parameters to learn a meaningful representation of the input data. For example, for the CIFAR-10 dataset, the BIL model with a convolutional filter $K$= 256 may result in a validation error that is 4.58 pp greater than the baseline model (i.e., 13.65 % - 9.07% = 4.58%). However, the validation error of the SVHN and CIFAR-10 datasets may be reduced by increasing the number of BIL convolutional filters (K) or by implementation of a channel independent network. It is also contemplated that the CIFAR-10 resulted in a high error rate due to the small size of the data set, which is 12 times smaller than SVHN.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data, logic, and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A method for implementing a convolutional neural network comprising:

    receiving input data for the convolutional neural network;

filtering the input data by applying a bitwise weight algorithm that learns bit specific relevance without a predefined ordinal structure being provided to generate direct binary input data; and
providing the direct binary input data to a convolutional layer within the convolutional neural network.

2. The method of claim 1, wherein the direct binary input data is provided to the convolutional layer without having to perform additional normalization to the input data.

3. The method of claim 1, wherein the bitwise weight algorithm operates by summing a product of each individual input data value and a bit specific weight corresponding to each bit of the individual input data value.

4. The method of claim 3, wherein the bit specific weight is trained using a labeled dataset specific to a given use-case.

5. The method of claim 1, wherein the convolutional neural network further comprises one or more fully connected layers and a softmax layer.

6. The method of claim 1, wherein the direct binary input data is further provided to a binary input layer that includes a convolutional kernel (K) filter having a filter size that is at least a 1x1 array.

7. A method for implementing a convolutional neural network comprising:

   receiving input data for the convolutional neural network;
   filtering the input data by applying a bitwise weight algorithm that learns bit specific relevance without a predefined ordinal structure being provided to generate direct binary input data; and
   providing the direct binary input data to a binary input layer that includes a convolutional kernel (K) filter having a filter size that is at least a 1x1 array.

8. The method of claim 7, wherein the bitwise weight algorithm operates by summing a product of each individual input data value and a bit specific weight corresponding to each bit of the individual input data value.

9. The method of claim 8, wherein the bit specific weight is trained using a labeled dataset specific to a given use-case.

10. The method of claim 7, wherein the direct binary input data is provided to a convolutional layer without having to perform additional normalization to the input data.

11. The method of claim 7, wherein one or more convolutional kernel filters are included within the binary input layer.

12. The method of claim 7, wherein the binary input layer factorizes a convolution in a depth-wise and point-wise convolution.

13. The method of claim 7, wherein the convolutional neural network further comprises one or more fully connected layers and a softmax layer.

14. A system for implementing a convolutional neural network comprising:

   an input for receiving data; and
   a processor that includes logic for filtering the input data by applying a bitwise weight algorithm that learns bit specific relevance without a predefined ordinal structure being provided to generate direct binary input data; and providing the direct binary input data to a convolutional layer within the convolutional neural network.

15. The system of claim 14, wherein the processor further includes logic that provides the direct binary input data to a binary input layer that includes a convolutional kernel filter having a filter size that is at least a 1x1 array.

16. The system of claim 15, wherein the processor further includes logic that includes the convolutional layer capable of receiving the direct binary input data provided by the binary input layer.

17. The system of claim 15, wherein the binary input layer is designed to include one or more convolutional kernel filters.

18. The system of claim 14, wherein the bitwise weight algorithm operates by summing a product of each individual input data value by a bit specific weight corresponding to each bit of the individual input data value.

19. The system of claim 18, wherein the bit specific weight is trained using a labeled dataset specific to a given use-case.

20. The system of claim 14, wherein the convolutional neural network further comprises one or more fully connected layers and a softmax layer.

**Figure 1**

**Figure 2**

**Figure 3**

**Figure 4**

**Figure 5**

Europäisches
Patentamt

European
Patent Office

Office européen
des brevets

# EUROPEAN SEARCH REPORT

Application Number

EP 19 20 9227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 089 577 B2 (XILINX INC [US]) 2 October 2018 (2018-10-02) * figures 1,3,4 * * column 3, line 53 - line 56 * * column 4, line 9 - line 46 * * column 6, line 10 - line 36 * ----- | 1-20 | INV. G06N3/04 G06N3/063 |
| X | Mohammad Rastegari ET AL: "XNOR-Net: ImageNet Classification Using Binary Convolutional Neural Networks" In: "International Conference on Financial Cryptography and Data Security", 2 August 2016 (2016-08-02), Springer, Berlin, Heidelberg 032548, XP055405845, ISBN: 978-3-642-17318-9 vol. 9908, pages 525-542, DOI: 10.1007/978-3-319-46493-0_32, * abstract * * section 3.2 * * section 4.1, first paragraph * * page 12, first paragraph, second line * ----- | 1,7,14 | |
| | | | TECHNICAL FIELDS SEARCHED (IPC) G06N G06T |

The present search report has been drawn up for all claims

| Place of search | Date of completion of the search | Examiner |
|---|---|---|
| The Hague | 6 April 2020 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 9227

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2020

| Patent document cited in search report | | Publication date | Patent family member(s) | | Publication date |
|---|---|---|---|---|---|
| US 10089577 | B2 | 02-10-2018 | CN | 109804385 A | 24-05-2019 |
| | | | EP | 3494521 A1 | 12-06-2019 |
| | | | JP | 2019531535 A | 31-10-2019 |
| | | | KR | 20190035856 A | 03-04-2019 |
| | | | US | 2018039886 A1 | 08-02-2018 |
| | | | WO | 2018026560 A1 | 08-02-2018 |

EPO FORM P0459

For more details about this annex : see Official Journal of the European Patent Office, No. 12/82